# EUROPEAN PATENT APPLICATION

(11) **EP 2 661 060 A1**
(43) Date of publication of application: **06.11.2013**
(21) Application number: 12166216.7
(22) Date of filing: 30.04.2012
(51) Int. Cl.: H04M 1/57, H04M 1/725

(54) **Displaying notification messages and messages on a portable electronic device**

(71) Applicant: BlackBerry Limited, Waterloo, ON N2L 3W8 (CA); Research in Motion TAT AB, 21140 Malmö (SE)
(72) Inventor: Greisson, Erik Artur, 211 40 Malmö (SE)
(74) Representative: Patel, Binesh

(57) **Abstract**

A method is described that can group notification messages together into a single line item that can be displayed with other received messages from a message store on a portable electronic device. The portable electronic device may provide a user friendly interface for displaying a plurality of notification messages as a grouped line item in an ordered list with other messages, such as e-mail messages or other communication messages.

## Description

### TECHNICAL FIELD

The present disclosure relates to displaying information on a portable electronic device and in particular to displaying messages, such as emails, and notifications together.

### BACKGROUND

Portable electronic devices may receive messages as well as notifications that are then displayed to a user. The messages or notifications may be displayed in one or more inboxes, applications, or home screens or notification centers. Traditional home screen or notification center applications may display individual messages or notifications according to the type of message or notification. As an example, a home screen application may display a number of recent email messages, followed by a number of recent telephone calls, followed by a number of application messages. Alternatively, all individual messages and notifications received from different applications may be displayed together according to a time of the message or notification was received. The display of messages and notifications may be cumbersome or may obscure or make it more difficult to identify relevant information.

Accordingly, systems and methods that enable the display of messages and notifications in a user friendly manner remain highly desirable.

### SUMMARY

In accordance with an aspect of the present disclosure there is provided a method of displaying notification messages on a portable electronic device, the method comprising: receiving a plurality of notification messages; grouping a subset of notification messages of the plurality of received notification messages together into a grouped line item; and displaying the grouped line item along with messages from a message store on the portable electronic device.

In accordance with another aspect of the present disclosure there is provided a portable electronic device for displaying notification messages, the portable electronic device comprising: a processor for executing instructions; and a memory coupled to the processor, the memory containing instructions for configuring the portable electronic device to: receiving a plurality of notification messages; grouping a subset of notification messages of the plurality of received notification messages together into a grouped line item; and displaying the grouped line item along with messages from a message store on a display of the portable electronic device.

In accordance with yet another aspect of the present disclosure there is provided a computer readable memory containing instructions which when executed by a processor provides a method of displaying notification messages on a portable electronic device, the instructions comprising receiving a plurality of notification messages; grouping a subset of notification messages of the plurality of received notification messages together into a grouped line item; and displaying the grouped line item along with messages from a message store on the portable electronic device.

### BRIEF DESCRIPTION OF THE DRAWINGS

Further features and advantages of the present disclosure will become apparent from the following detailed description, taken in combination with the appended drawings, in which:
Figure 1 depicts an illustrative representation of components for displaying messages and notification messages together on a portable electronic device;
Figures 2 to 4 depict screens displaying grouped notification messages as a single line item;
Figures 5 to 7 depict further screens displaying grouped notification messages as a single line item;
Figure 8 depicts a method of displaying notification messages on a portable electronic device;
Figure 9 depicts a further method of displaying notification messages on a portable electronic device; and
Figure 10 show a block diagram of a portable electronic device in accordance with an illustrative embodiment.

It will be noted that throughout the appended drawings, like features are identified by like reference numerals.

### DETAILED DESCRIPTION

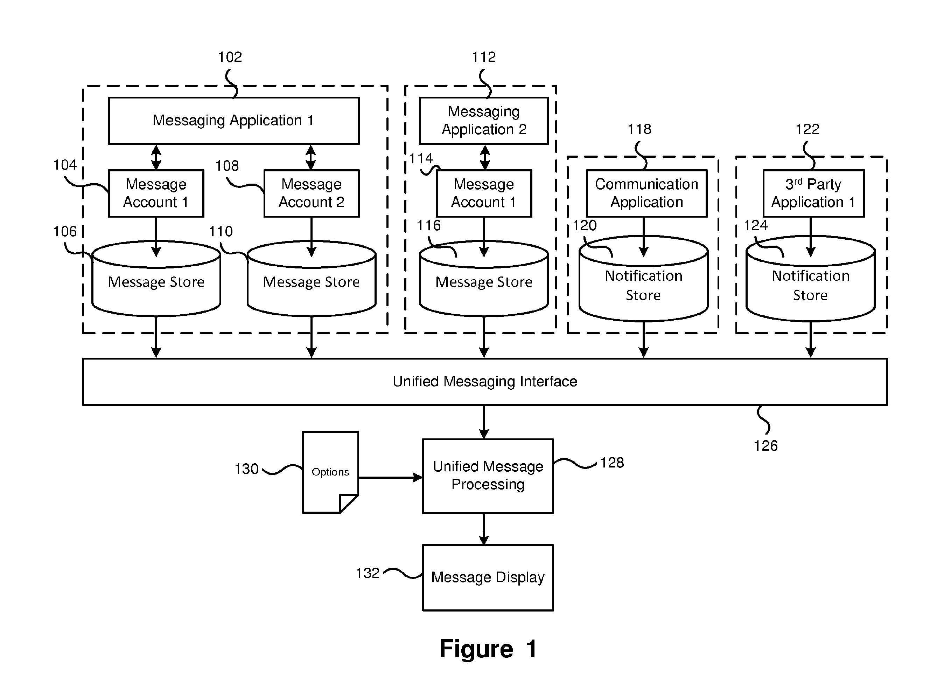

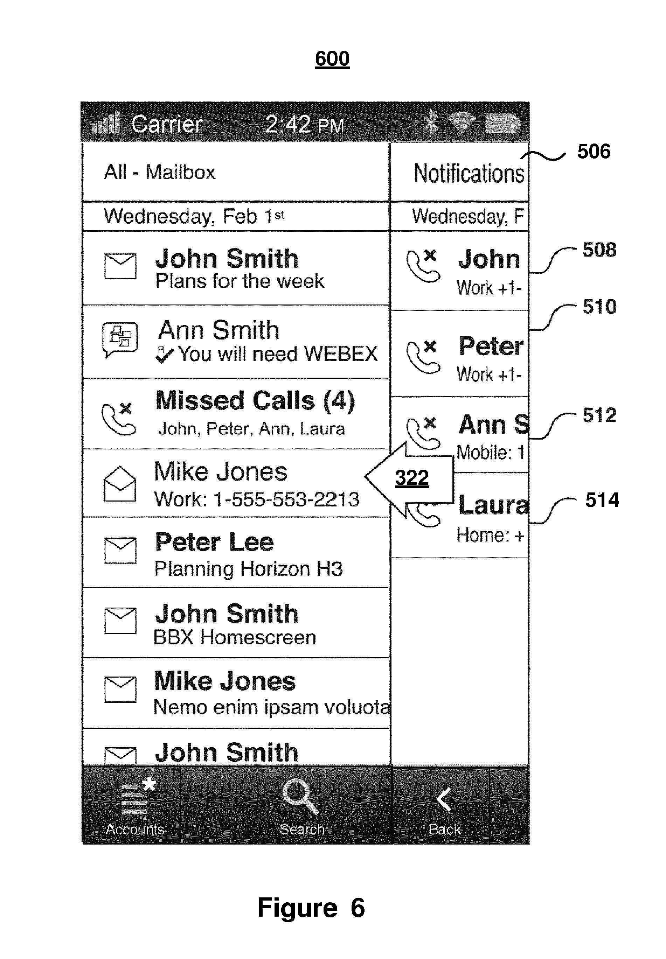

Embodiments are described below, by way of example only, with reference to Figures 1 to 10. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

Portable electronic devices, such as smartphones or tablets, allow a user to send and receive messages from various different applications such as e-mail messaging applications, instant messaging applications, social networking applications and other types of communication applications. In addition to communication messages, a portable electronic device may display notification messages received from, or generated by applications which may notify the user about the occurrence of various events, such as received calls, missed calls, updates to applications, and status changes associated with applications. The messages and notification messages may be displayed separately, for example, e-mail messages received from a single e-mail account may be displayed in an inbox, and notification messages from an application may be displayed in the application. Alternatively, all messages and notification messages may be displayed together in unified interface provided by a single combined inbox.

When displaying all messages and notification message together in a single inbox, the individual messages and notification messages may be presented as an ordered list, with different communication messages and different notification messages intermingled together. The displayed list of messages and notification messages may be ordered according to various characteristics of the messages and notification messages, such as a sender or recipient name associated with the message or application name associated with the notification message, or a time stamp of the message or notification message. When the notification messages and messages are displayed, each may be associated with an icon or other indication of the message or notification type. For example, e-mail messages may be associated with an envelope icon, telephone or voice calls may be associated with a handset icon, and notification messages may be associated with a notification icon, or application icon of the application associated with the notification message.

Displaying all of the messages and notification messages together in a single inbox may be beneficial by providing a single location to view all messages and notification messages; however, it presents all messages and notification messages equally provided a cluttered inbox. Not all messages and notification messages may be equally important to a user, for example, notification messages of changes in a user's social networking application may not be as important to the user as e-mails received from a work e-mail account. Further, although notification messages may be less important to a user in certain situations, they may be received more frequently. As described further herein, it is possible to display both messages and notification messages in a manner that may not unduly distract a user from important messages or types of messages.

Figure 1 depicts an illustrative representation of components for displaying messages and notification messages together on a portable electronic device. The components depicted in Figure 1 may be provided by hardware, software or a combination of hardware and software of the portable electronic device. The components may include a plurality of applications. As depicted, a message application 'Messaging Application 1' 102 may provide messaging functionality to a user for sending a receiving communication messages. Messaging Application 1 102 may be for example an e-mail application. Messaging Application 1 102 may provide messaging functionality for a plurality of different accounts depicted as 'Message Account 1' 104, which stores sent and received messages in a message store 106, and 'Message Account 2' 108, which stores sent and received messages in a message store 110.

The portable electronic device may provide more than one messaging application. As depicted a further messaging application, 'Messaging Application 2' 112, may send and receive messages from an associated account 114, 'Message Account 1', which are stored in message store 116. Messaging Application 2 112 may be for example an instant messaging application.

The portable electronic device may further provide a communication application 118 for providing a further type of communication to the user. For example, the communication application 118 may be a voice or video application for making and receiving calls. The communication application may provide notification messages to the user which may be stored in a notification store 120. The notification messages may notify the user of communication events such as a received voice call or missed voice call.

The portable electronic device may further provide one or more 3^{rd} party application, '3rd Party Application 1' 122. The 3^{rd} party application may be a social network application, allowing a user to view messages broadcast from other users of the social network. Additionally or alternatively, the 3^{rd} party application may be an application such as a game or productivity application. The 3^{rd} party application 122 may receive or generate notification messages that are stored in a notification store 124. The notification messages may notify the user about broadcast message events, such as a user of the social network updating a status or sending a new message. Alternatively the notification message may notify the user about the occurrence of application events, or changes in the application status. For example, a notification message may notify the user that an updated version of the application is available.

The messages and notification messages stored in the message stores 106, 110, 116 and the notification message stores 120, 124 may be displayed to the user. The messages and notification messages stored in the separate stores may be displayed to the user separately. That is the messages in message store 106 may be displayed to the user separately from the messages stored in the other stores.

The portable electronic device may comprise a unified, or combined, messaging interface 126 for displaying messages and/or notification messages from a plurality of the message and notification stores in a single list or inbox. The unified messaging interface 126 may provide an interface to access all of the messages and notification messages in the different message and notification stores. The messages and notification messages in one or more of the stores may be displayed together. The combined messages and notification messages may be processed by a unified message processing component 128 for display in a single inbox to the user.

The unified message processing component 128 may process notification messages from one or more notification stores in order to group a plurality of notification messages together for display as a single line item with other messages. The unified message processing component 128 may utilize a plurality of options or settings for processing the notification messages. The options may specify which notification messages to group together into a single line item. The notification messages may be grouped together based on the application the notification message is associated with, the type of notification message, or other characteristics of the notification messages. The unified message processing component 128 may process the notification messages from a plurality of notification stores according to the options 130 and group notification messages together into one or more line items accordingly. When the unified message processing component 128 groups a plurality of notification messages together into a single line item, a time stamp can be assigned to the grouped line item. The time stamp assigned to the grouped line item may be set as the most recent time of the grouped notification messages. The time stamp of the grouped line item allows the grouped line item representing the plurality of notification messages to be displayed in an ordered list with other messages in chronological order. If there are other notification messages that are not grouped together into a grouped line item, they may be displayed individually with the messages and grouped line items.

The portable electronic device may further comprise a message display component 132. The message display component may display the messages, grouped line items and notification messages in a single ordered list. The messages, grouped items, and individual notification messages may be displayed in an ordered list according to the time stamp of the messages, notification messages or grouped line items.

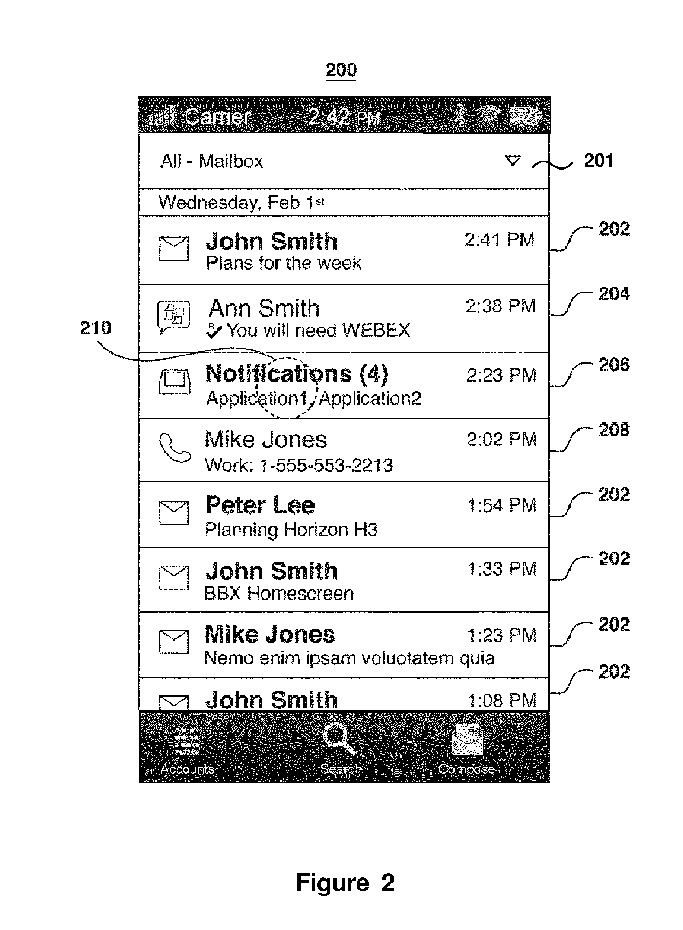

Figures 2 to 4 depict screens displaying grouped notification messages as a single line item. The screen 200 provides an ordered list of a plurality of messages and grouped notification messages. As depicted, the screen 200 displays a plurality of different individual messages and notification messages 202, 204, 208. Each of the messages and notification messages may be different for different applications. For example, messages 202 may be e-mail messages and message 204 may be an instant message. A grouped line item 206, representing a plurality of notification messages is displayed with the messages. As depicted the grouped line item 206 is associated with a time stamp, allowing the grouped line item 206 to be displayed in a chronological order with other messages and notification messages. Individual notification messages that are not grouped in a grouped line item may be displayed as well. For example, a single notification message 208 is displayed with the other messages and grouped line items. The single notification message 208 is depicted as being a notification message of a missed call.

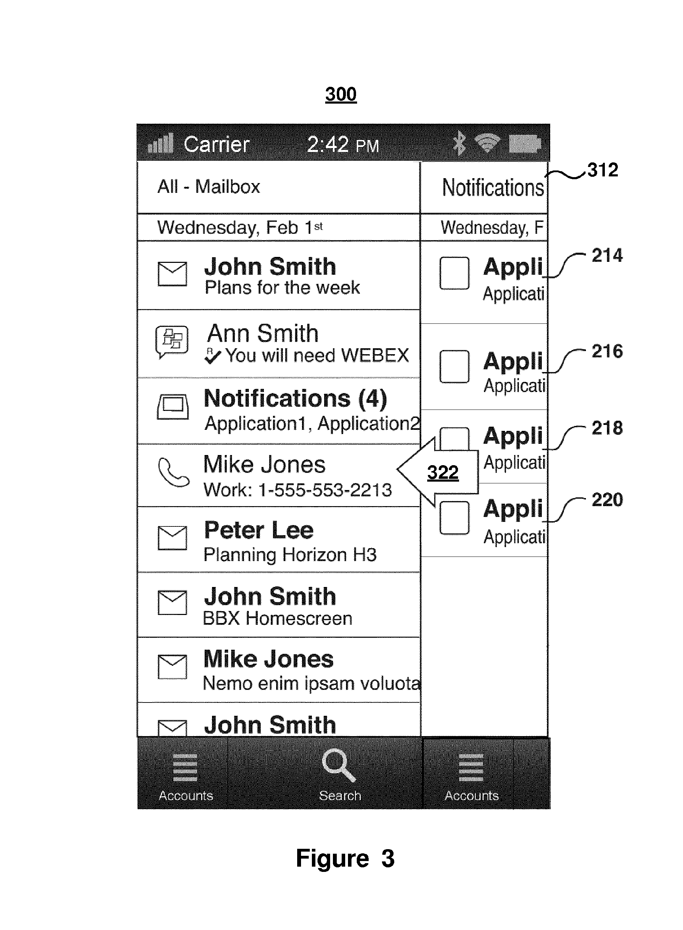

A user may select one of the messages or notification messages as will be appreciated. It is assumed that the portable electronic device comprises a touch-sensitive display, allowing a user to interact with the display using touch gestures. As depicted in Figure 2 by dashed line circle 210, a user may tap the displayed grouped line item 206. When a user taps, or otherwise selects the grouped line item 206 the grouped notification messages of the grouped line item 206 may be displayed. The grouped line item 206 may be expanded to show the individual notification messages along with the messages. If the grouped line item is expanded, the individual notification messages of grouped line item may be shown out of a chronological order with the other messages. Alternatively, as depicted in Figure 3, the individual notification messages 214, 216, 218, 220 may be displayed in a separate pane 312, window or frame which may slide in as depicted by arrow 322, or otherwise be displayed.

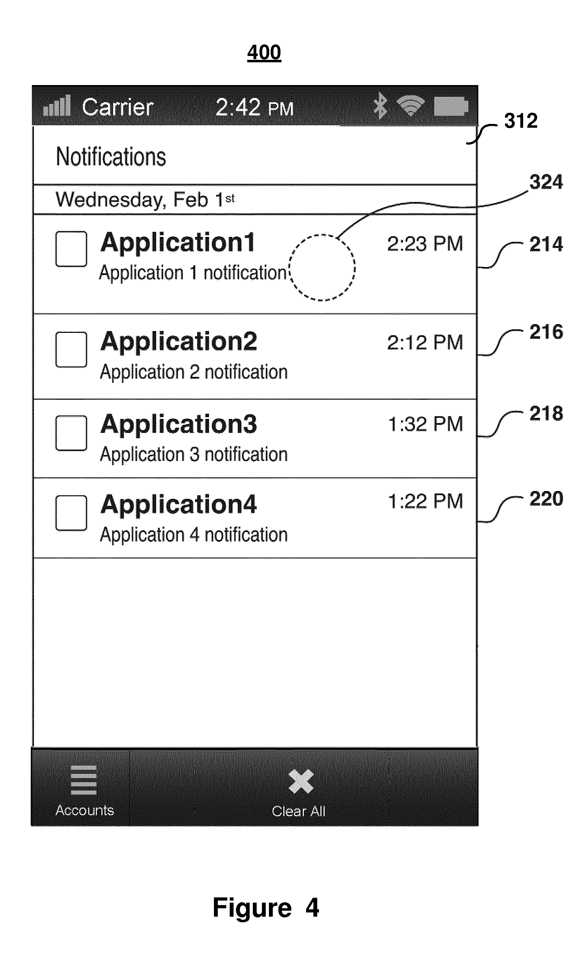

Figure 4 depicts the panel 312 displaying the notification messages 214, 216, 218, 220 of the grouped line item 206. The notification messages 214, 216, 218, 220 may be grouped together based on a common characteristic of the notification messages. For example, the notification messages may all be application notification messages. The time stamp of the grouped line item may be set based on a time associated with one of the notification messages of the grouped line item. For example, the time stamp may be set according to the time of the most recently received notification message.

When the notification messages of the grouped line item are displayed as depicted in Figure 4, a user may select one of the displayed notification messages as depicted by dashed line circle 324. Selecting a notification message may open the application associated with the notification message. Alternatively, selecting the notification message may generate a message reply for responding to the notification message. Once the notification message has been reviewed or responded to, the notification message may be removed from the grouped line item. Alternatively, a reviewed or responded to notification message may remain in the grouped line item. A selected notification message may be deleted from a grouped line item.

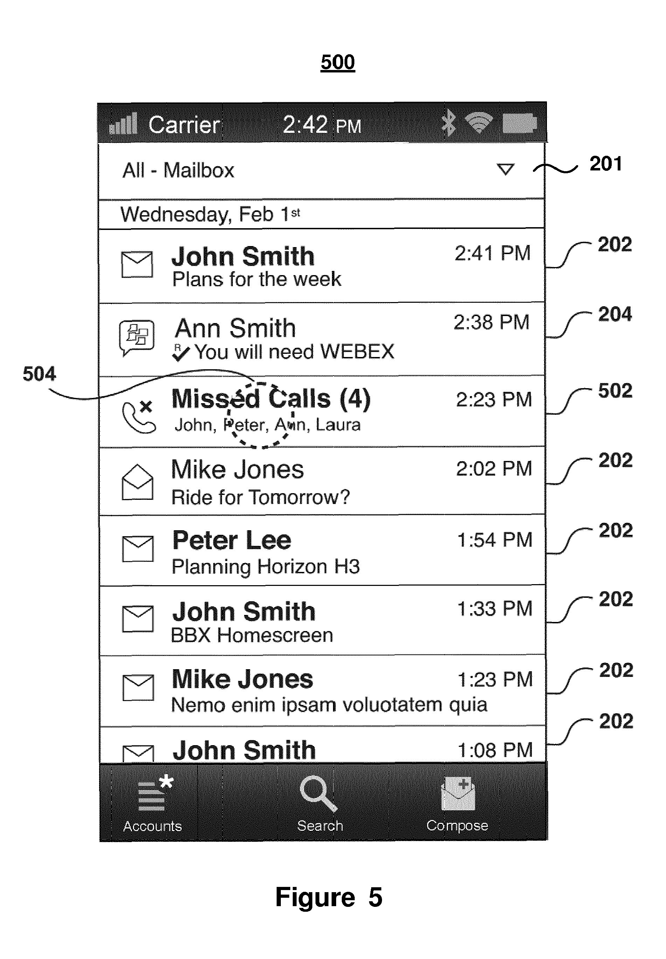

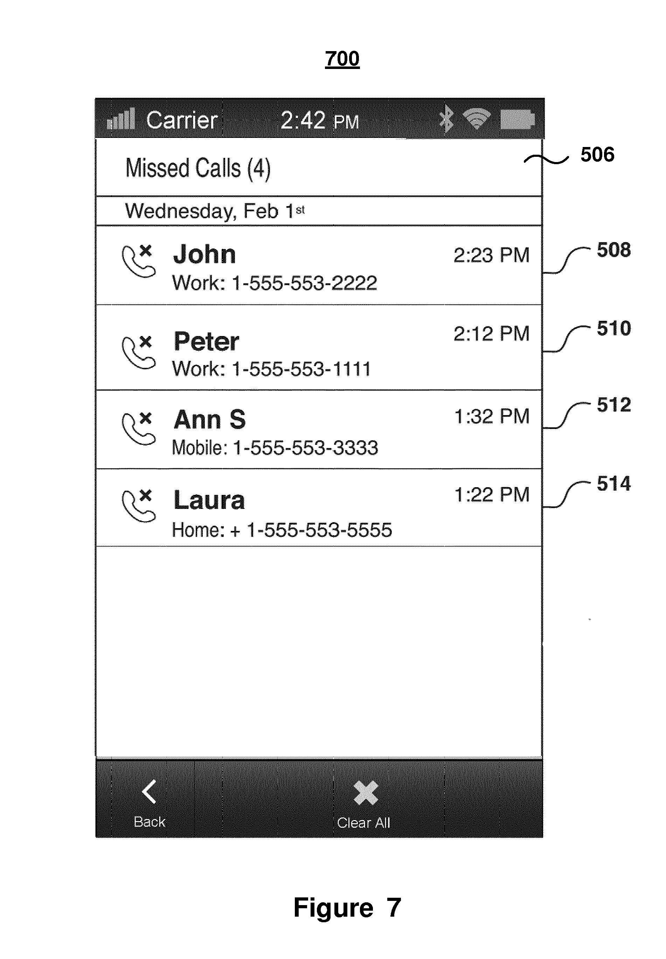

Figures 5 to 7 depict further screens displaying grouped notification messages as a single line item. The screens are similar to those described above, and as such, similar elements are not described further. In contrast to Figures 2 to 4, which depicted grouping a plurality of application notification messages together into a single line item 206, the screens of Figure 5 to 7 depict a plurality of call notification such as missed calls grouped into a single line item 502. Again, a user can select the grouped line item as depicted by dashed line circle 504. When the grouped line item is selected, a panel 506, window or frame may be displayed that displays the missed call notification messages 508, 510, 512, 514. The panel 506 may slide in a display over top of the displayed list of messages as depicted in Figure 7, or may be displayed besides the displayed messages.

As depicted in Figures 2 to 4 and 5 to 7, a plurality of notification messages may be grouped together into a line item for display in an inbox. The grouped line item may have an associated time stamp associated with the most recently received notification message. Additionally, the grouped line item may have text displayed based on one or more of the notification messages that are grouped together that is related to the type or content of the notification messages.

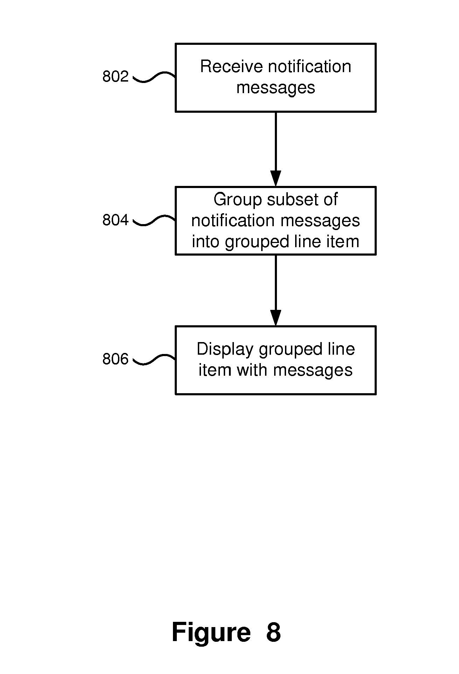

Figure 8 depicts a method of displaying notification messages on a portable electronic device. The method 800 comprises receiving a plurality of notification messages (802). The notification messages may be received from one or more 3^{rd} party applications or native applications on the device. The notification messages may be call notification messages or application notification messages. The method may further comprise grouping a subset of the notification messages together into a grouped line item (804). Although referred to as grouping a subset of the notification messages together, it will be appreciated that the subset of notification messages grouped together may comprise all of the notification messages. The notification messages may be grouped together based on one or more characteristics of the notifications messages. For example, all notifications could be grouped together, all call notification messages (e.g. missed or received calls) could be grouped together, all application notification messages could be grouped together or other common characteristics could be used to group the notification messages together. The method further comprises displaying the grouped line item along with messages (806) from a message store on the portable electronic device. The messages may be e-mail messages, instant messages, or other messages directed to or from the user of the portable electronic device that are considered non-broadcast type messages.

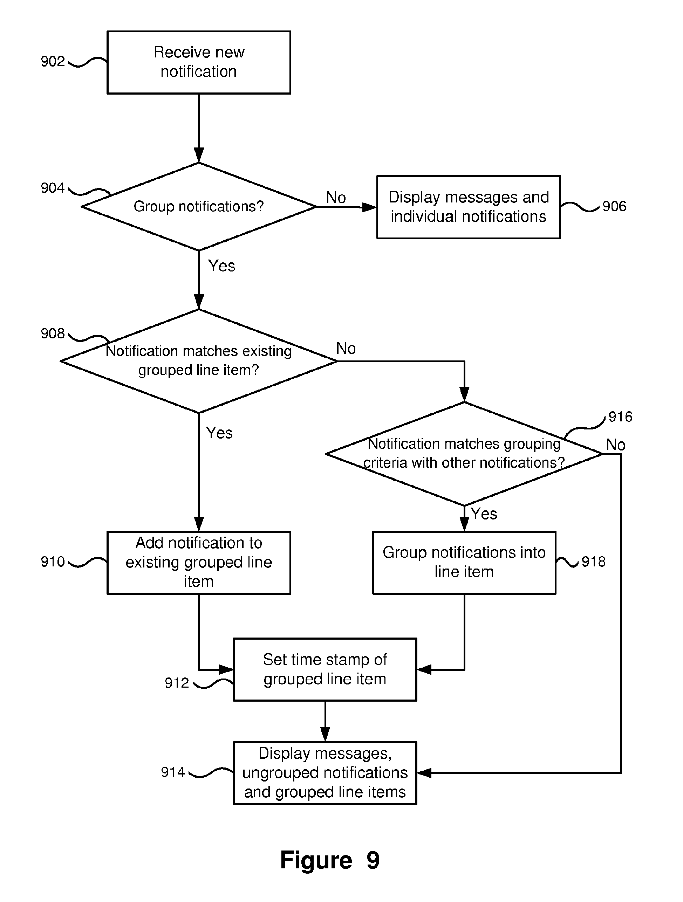

Figure 9 depicts a further method of displaying notification messages on a portable electronic device. The method 900 receives a new notification message (902) and determines if notification messages are to be grouped together (904). If the notification messages are not to be grouped together (No at 904), then the messages and individual notifications are displayed together (906). If the notification messages are to be grouped together (Yes at 904), it is determined if a characteristic of the new notification message matches the characteristic of an existing grouped line item used to group notification messages together (908). If the characteristic of the new notification message matches the grouping characteristic of the grouped line item (Yes at 908), then the new notification message is added to the existing grouped line item having the same grouping characteristic (910). Once the new notification message is added to the existing grouped line item, the time stamp of the existing line item is updated to the time associated with the new notification message (912) and the messages, grouped line items and any ungrouped individual notification messages are displayed together in an ordered list (914). The change in timestamp will move the grouped line item to a corresponding position in the inbox display.

If the characteristic of the new notification message does not match the grouping characteristic of any existing grouped line items (No at 908), then the method checks to see if any of the existing individual notification messages match the grouping characteristic of the new notification message (916). If the grouping characteristic of the new notification message does not match the grouping characteristic of previously received notification messages (No at 916), then the method displays the messages, any grouped line items, and the ungrouped individual notification messages (914). If the grouping characteristic of the new notification message matches the grouping characteristic of any existing notification messages (Yes at 916), then the method groups the notification messages with matching grouping characteristics together into a new grouped line item (918). Once the new notification message is grouped with a previous notification message in a grouped line item, the time stamp of the new grouped line item is set to the time associated with the new notification message (912) and the messages, grouped line items and any ungrouped individual notification messages, are displayed together in an ordered list (914).

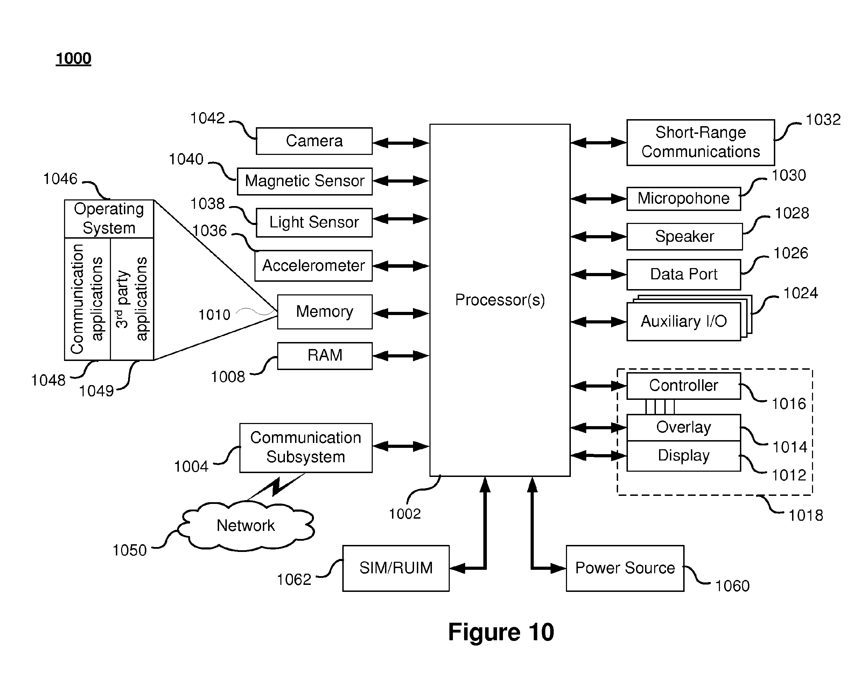

Figure 10 show a block diagram of a portable electronic device in accordance with an illustrative embodiment. The portable electronic device 1000 comprises a processor 1002, a multiple core processor or multiple processors that interface with components or modules of the device to provide functionality required. A touch-sensitive display 1018 is coupled to the processor 1002. The touch-sensitive display 1018 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example embodiment, the touch-sensitive display 1018 is a capacitive touch-sensitive display which includes a capacitive touch-sensitive overlay 1014. The overlay 1014 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The processor 1002 interfaces with memory 1010 providing an operating system (OS) 1046 and programs, applications or functionality including one or more communication applications 1048, one or more 3^{rd} party applications 1049, and functionality for displaying grouped notification messages. The OS, programs, applications and functionality is provided by instructions that are executed by the processor 1002. Random access memory 1008 is provided for the execution of the instructions and for processing data to be sent to or received from various components of the device. Various input/out devices or sensors may be provided such as an accelerometer 1036, light sensor 1038, magnetic sensor 1040, and one or more cameras 1042. A communication subsystem 1004 is provided for enabling data to be sent or received with a local area network 1050 or wide area network utilizing different physical layer and access technology implementations. A subscriber identity module or removable user identity module 1062 may be provided depending on the requirement of the particular network access technology to provide user access or identify information. Short-range communications 1032 may also be provided and may include near-field communication (NFC), radio frequency identifier (RFID), Bluetooth technologies. The device may also be provided with a data port 1026 and auxiliary input/output 1024 interface for sending and receiving data. A microphone 1030 and speaker 1028 may also be provided to enable audio communications via the device 1000. The portable electronic device 1000 can be powered by a local power source 1060 such as a battery or be coupled to an external power source supplying power to the components of the device.

The display 1012 of the touch-sensitive display 1018 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as contact inputs, touch contacts or touch events, may be detected by the touch-sensitive display 1018. The processor 1002 may determine attributes of the touch, including a location of a touch. Touch location data may include an area of contact or a single point of contact, such as a point at or near a center of the area of contact, known as the centroid. A signal is provided to the controller 1016 in response to detection of a touch. A touch may be detected from any suitable object, such as a finger, thumb, appendage, or other items, for example, a stylus, pen, or other pointers, depending on the nature of the touch-sensitive display 1018. The location of the touch moves as the detected object moves during a touch. The controller 1016 and/or the processor 1002 may detect a touch by any suitable contact member on the touch-sensitive display 1018. Similarly, multiple simultaneous touches are detected.

One or more gestures are also detected by the touch-sensitive display 1018. A gesture is a particular type of touch on a touch-sensitive display 1018 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 1014 may evaluate swipes with respect to the origin point at which contact is initially made with the touch-sensitive overlay 1014 and the end point at which contact with the touch-sensitive overlay 1014 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 1014 to initialize the gesture, a horizontal movement of the detected object from the origin point to an end point towards the right or left side of the touch-sensitive overlay 1014 while maintaining continuous contact with the touch-sensitive overlay 1014, and a breaking of contact with the touch-sensitive overlay 1014. Similarly, a vertical swipe typically comprises an origin point towards the top or bottom of the touch-sensitive overlay 1014 to initialize the gesture, a horizontal movement of the detected object from the origin point to an end point towards the bottom or top of the touch-sensitive overlay 1014 while maintaining continuous contact with the touch-sensitive overlay 1014, and a breaking of contact with the touch-sensitive overlay 1014.

Swipes can be of various lengths, can be initiated in various places on the touch-sensitive overlay 1014, and need not span the full dimension of the touch-sensitive overlay 1014. In addition, breaking contact of a swipe can be gradual in that contact with the touch-sensitive overlay 1014 is gradually reduced while the swipe is still underway.

Although certain methods, apparatus, computer readable memory, and articles of manufacture have been described herein, the scope of coverage of this disclosure is not limited thereto. To the contrary, this patent covers all methods, apparatus, computer readable memory, and articles of manufacture fairly falling within the scope of the appended claims either literally or under the doctrine of equivalents.
Although the following discloses example methods, system and apparatus including, among other components, software executed on hardware, it should be noted that such methods, system and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods, system and apparatus.

## Claims

1. A method of displaying notification messages on a portable electronic device (1000), the method comprising:
receiving (802) a plurality of notification messages;
grouping (804) a subset of notification messages of the plurality of received notification messages together into a grouped line item; and
displaying (806) the grouped line item along with messages from a message store on the portable electronic device.

2. The method of claim 1 further comprising displaying the subset of notification messages on detecting a selection of the grouped line item.

3. The method of claim 2 wherein displaying the subset of notification messages comprises displaying a list of the subset of notification messages of the grouped line item by:
expanding the grouped line item to display the subset of notification messages; or
displaying the subset of notification messages in a separate panel.

4. The method of claim 2 or 3, further comprising invoking an application associated with the selected notification message when a selection of one of the displayed subset of notification messages is received or invoking a reply directly when a selection of one of the displayed subset of notification messages is received.

5. The method of any one of claims 2 to 4, further comprising removing a notification message from the subset of notification messages of the grouped line item once the notification message is reviewed.

6. The method of any one of claims 2 to 4, further comprising removing one or more selected notification messages from the grouped line item when an indication to delete the one or more selected notification messages is received.

7. The method of any one of claims 1 to 6, wherein the grouping of the subset of notification messages into the grouped line item is based upon an application the respective notification message was received from.

8. The method of any one of claims 1 to 7, wherein the grouping of the subset of notification messages into the grouped line item is based on a notification type common to the subset of notification messages.

9. The method of claim 8, wherein notification type of the notification messages comprises one or more of: a call notification message, a missed call notification message, a received call notification message, an application notification message, an application status notification message and a communication status notification message.

10. The method of any one of claims 1 to 9, wherein the grouped line item is associated with a time stamp, and wherein displaying the grouped line item along with the received messages comprises ordering the grouped line item and the messages according to the time stamp of the grouped line item and a receipt time of the messages.

11. The method of claim 10, further comprising:
setting the time stamp of the grouped line item according to a time one of the notification messages of the subset of notification messages was received.

12. The method of any one of claims 1 to 11, further comprising:
receiving a new notification message;
adding the new notification message to the subset of notification messages of the grouped line item.

13. The method of any one of claims 1 to 12, further comprising:
grouping a second subset of notification messages of the plurality of received notification messages together into a second grouped line item.

14. A portable electronic device (1000) for displaying notification messages, the portable electronic device comprising:
a processor (1002) for executing instructions; and
a memory (1010) coupled to the processor, the memory containing instructions for configuring the portable electronic device to provide a method according to any one of claims 1 to 13.

15. A computer readable memory containing instructions which when executed by a processor provides a method of displaying notification messages on a portable electronic device, the instructions comprising instructions for providing a method according to any one of claims 1 to 13.
